(19) Europäisches Patentamt

European Patent Office

Office européen des brevets

(11) **EP 2 242 794 B1**

(12) # EUROPÄISCHE PATENTSCHRIFT

(45) Veröffentlichungstag und Bekanntmachung des Hinweises auf die Patenterteilung:
**30.04.2014 Patentblatt 2014/18**

(21) Anmeldenummer: **09710684.3**

(22) Anmeldetag: **11.02.2009**

(51) Int Cl.:
***C08J 9/28*** *(2006.01)*

(86) Internationale Anmeldenummer:
**PCT/EP2009/051576**

(87) Internationale Veröffentlichungsnummer:
**WO 2009/101111 (20.08.2009 Gazette 2009/34)**

(54) **VERFAHREN ZUR HERSTELLUNG PORÖSER STRUKTUREN AUS SYNTHETISCHEN POLYMEREN**

METHOD FOR PRODUCING POROUS STRUCTURES FROM SYNTHETIC POLYMERS

PROCÉDÉ DE PRODUCTION DE STRUCTURES POREUSES EN POLYMÈRES SYNTHÉTIQUES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **11.02.2008 EP 08151251**

(43) Veröffentlichungstag der Anmeldung:
**27.10.2010 Patentblatt 2010/43**

(73) Patentinhaber: **BASF SE**
**67056 Ludwigshafen (DE)**

(72) Erfinder:
 • **SCHWIEGK, Stefan**
  **67433 Neustadt (DE)**
 • **WILMS, Axel**
  **67256 Weisenheim (DE)**
 • **LANGE, Ronald Frans Maria**
  **3073 Guemlingen (DE)**
 • **SIEMER, Michael**
  **68159 Mannheim (DE)**

 • **D'ANDOLA, Giovanni**
  **69120 Heidelberg (DE)**
 • **RAUSCHENBERGER, Volker**
  **67304 Eisenberg (DE)**
 • **HERMANUTZ, Frank**
  **71229 Leonberg (DE)**
 • **GAEHR, Frank**
  **73730 Esslingen (DE)**
 • **COURTOIS, Julien**
  **67063 Ludwigshafen (DE)**
 • **GERHARD, Dirk**
  **68163 Mannheim (DE)**

(56) Entgegenhaltungen:
 WO-A-2007/128268     WO-A-2008/061942
 WO-A-2008/077786     DE-A1- 10 233 703
 US-A- 5 856 426      US-A1- 2005 288 484

 • **DATABASE WPI Week 200352 Thomson Scientific, London, GB; AN 2003-545808 XP002527588 & JP 2003 034733 A (MATSUSHITA DENKI SANGYO KK) 7. Februar 2003 (2003-02-07)**

**EP 2 242 794 B1**

**Beschreibung**

Die Erfindung betrifft Verfahren zur Herstellung poröser Strukturen aus synthetischen Polymeren, derartige poröse Strukturen und ihre Verwendung.

Verfahren zur Herstellung von Polymerschäumen sind seit längerem bekannt. Die DE-A-102 33 703 betrifft ein derartiges Verfahren zur Herstellung nanozellularer Polymerschäume mit Zellgrößen von 1 $\mu$m oder darunter, bei dem man ein Polymer in einem sublimierbaren Lösungsmittel löst, die Polymerlösung innerhalb von maximal zwei Sekunden auf eine Temperatur unterhalb des Schmelzpunktes des Lösungsmittels abkühlt, wodurch eine gefrorene Mischung entsteht, und das gefrorene Lösungsmittel durch Gefriertrocknung entfernt, wodurch ein nanozellularer Polymerschaum entsteht.

Neben zahlreichen Polymeren werden auch Polyamide erwähnt, während sich die Beispiele auf Polystyrol beziehen.

US 5,300,272 betrifft die Herstellung von mikrozellulärem Kohlenstoffschaum mit offener Porosität. Der Vorläufer für den Kohlenstoffschaum wird hergestellt durch Phaseninversion eines Polyacrylnitrils in einer Lösung, die im Wesentlichen aus einem Alkalimetallhalogenid und einem Phaseninversionslösungsmittel für das Polyacrylnitril besteht. Als Lösungsmittel wird insbesondere Propylencarbonat eingesetzt.

J. H. Aubert und R. L. Clough beschreiben in Polymer, 1985, Vol. 26, Seiten 2047 bis 2054 die Herstellung von Polystyrolschäumen mit mikroporöser offenzelliger Struktur. Zunächst wird das Polystyrol in einem Lösungsmittel wie Cyclohexan gelöst, sodann entgast und daraufhin schnell abgekühlt, wobei das Lösungsmittel gefriert. Sodann wird das Lösungsmittel durch Gefriertrocknen entfernt, wodurch das Polymer als ein Schaum zurückbleibt.

In der US 4,118, 449 ist die Herstellung von mikrozellulärem Zelluloseacetatschaum beschrieben, bei dem Zelluloseacetat in einem auf Aceton basierendem Lösungsmittel gelöst wird, die erhaltene Lösung in einem Wasserbad durch Abkühlen in ein Gel überführt wird und das Gel gefriergetrocknet wird, wobei Wasser und Lösungsmittel sublimieren und die Gelstruktur sich zu einem mikrozellularen Schaum verfestigt.

JP 2003 034733 A beschreibt poröse Strukturen aus Polyamid mit einem Porendurchmesser von 500 nm oder weniger. Die Strukturen werden gewonnen, indem ein Polyamidgel durch Gefriertrocknung vom Lösemittel befreit wird.

In der DE-A-40 09 865 ist die Herstellung von Polyacrylnitril-Hohlfaden für Membrananwendungen mit asymmetrischer Porenstrukur des Mantels beschrieben. Eine Polyacrylnitrillösung in DMF wird zusammen mit Glycerin als Kernflüssigkeit ausgesponnen und sodann im Wasser gefällt, wobei der Hohlfaden entsteht. Ferner ist es aus der US-A-2005 0288484 bekannt, ionische Flüssigkeiten als Lösungsmittel für unterschiedliche Polymere einzusetzen, um durch nachfolgendes Ausfällen durch Zusatz eines Nicht-Lösungsmittels Polymerblends auszufällen. Die Blends basieren auf Zellulose.

Poröse Polymerstrukturen werden für eine Vielzahl von Anwendungen benötigt, beispielsweise in der Filter- und Membrantechnologie sowie im medizinischen Bereich. Hierbei werden häufig möglichst gleichförmige mikroporöse, offenzeilige Schäume, insbesondere in Form von Fasern, benötigt.

Aufgabe der vorliegenden Erfindung ist die Bereitstellung von Verfahren zur Herstellung poröser Strukturen aus synthetischen, z. B., thermoplastischen, Polymeren. Ferner sollen neue derartige poröse Strukturen bereitgestellt werden.

Die Aufgabe wird erfindungsgemäß gelöst durch ein Verfahren gemäß Anspruch 1 zur Herstellung poröser Strukturen, ausgewählt aus porösen Fasern, Folien, Filmen, Beschichtungen aus Polyamid durch Lösen des Polyamids in einer ionischen Flüssigkeit und Fällen oder Koagulieren des gelösten Polyamids durch Kontaktieren der Lösung mit einem flüssigen Fällmedium.

Die Aufgabe wird zudem gelöst durch poröse Struktren ausgewählt aus Fasern, Folien, Filmen, Beschichtungen aus Polyamid 6 oder Polyamid-66, die nach dem vorstehenden Verfahren erhältlich sind.

Die Aufgabe wird ferner gelöst durch die Verwendung derartiger poröser Strukturen gemäß Anspruch 9 zur Herstellung von Membranen, Filtern, Schlichten, Haftgrundierungen, Trägermaterialien, Hygieneartikeln, Isoliermaterialien und zur Ausrüstung von Textilien.

Es wurde erfindungsgemäß gefunden, dass in ionischen Flüssigkeiten gelöste synthetische, z. B. thermoplastische Polymere durch Ausfällung in poröse Strukturen überführt werden können. Durch Nassspinnverfahren sind so poröse Fasern zugänglich, während durch Aufrakeln des gelösten Polymers auf eine Substratfläche und nachfolgendes Eintauchen in ein Fällungs- oder Koagulationsbad Folien und Filme oder Beschichtungen zugänglich sind. Durch ein Besprühen mit Wasser oder Behandlung mit Wasserdampf vor dem Eintauchen in das Fällungs- oder Koagulationsbad kann die Oberfläche porös gestaltet werden, während sonst eine weitgehend geschlossene Oberfläche erhalten wird, die nur vereinzelte Poren aufweist.

Es sind so beispielsweise Beschichtungen von textilen Substraten wie Geweben, Gewirken und Vliesen möglich, die zu spezifischen Eigenschaften der Textilien führen, beispielsweise Wasseraufnahme- und -bindefähigkeit, Wasserdampfdurchlässigkeit und Wind- oder Wasserdichtigkeit.

Im Folgenden werden zunächst die für das erfindungsgemäße Verfahren bevorzugten Polyamide und ionischen Flüssigkeiten und sodann die Herstellungsverfahren und Eigenschaften der erhaltenen porösen Strukturen beschrieben. Das Lösen von Polymeren in ionischen Lösungsmitteln ist an sich bekannt, siehe US-1-2005 0288484.

Erfindungsgemäß werden Polyamide eingesetzt. Dabei kann es sich um beliebige Polyamide handeln, beispielsweise aliphatische, teilaromatische oder aromatische Polyamide, die amorph, kristallin oder teilkristallin sein können. Die Polyamide können beliebige geeignete Viskositäten bzw. Molekulargewichte aufweisen.

Polyamide (PA)

Geeignet sind Polyamide mit aliphatischem teilkristallinen oder teilaromatischem sowie amorphem Aufbau jeglicher Art und deren Blends, einschließlich Polyetheramiden wie Polyetherblockamiden. Unter Polyamiden im Sinne der vorliegenden Erfindung sollten alle bekannten Polyamide verstanden werden.

Solche Polyamide weisen im Allgemeinen eine relative Viskosität (RV) von 1,5 bis 10, vorzugsweise 3,0 bis 8,0, insbesondere 3,3 bis 7,0, auf, bestimmt in einer 1 Gew.-%-igen Lösung in 96 %-iger Schwefelsäure bei 25°C gemäß ISO 307. Diese Werte gelten insbesondere für Polyamid 6.

Halbkristalline oder amorphe Harze mit einem Molekulargewicht (Gewichtsmittelwert) von mindestens 5.000, wie sie z. B. in den amerikanischen Patentschriften 2 071 250, 2 071 251, 2 130 523, 2 130 948, 2 241 322, 2 312 966, 2 512 606 und 3 393 210 beschrieben werden, sind bevorzugt. Beispiele hierfür sind Polyamide, die sich von Lactamen mit 7 bis 13 Ringgliedern ableiten, wie Polycaprolactam, Polycapryllactam und Polylaurinlactam, sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien Adipinsäure, Azelainsäure, Sebacinsäure, Dodecandisäure (= Decandicarbonsäure) und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(a-aminophenyl)methan, Di- (4-aminocyclohexyl)-methan, 2,2-Di-(aminophenyl)-propan oder 2,2-Di-(4-aminocyclohexyl)-propan.

Bevorzugte Polyamide sind Polyhexamethylenadipinsäureamid (PA 66) und Polyhexamethylensebacinsäureamid (PA 610), Polycaprolactam (PA 6) sowie Copolyamide 6/66, insbesondere mit einem Anteil von 5 bis 95 Gew.-% an Caprolactam-Einheiten. PA 6, PA 66 und Copolyamide 6/66 sind besonders bevorzugt.

Außerdem seien auch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Weitere Beispiele sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.

Weiterhin haben sich solche teilaromatischen Copolyamide wie PA 6/6T und PA 66/6T als besonders vorteilhaft erwiesen, da sie unabhängig vom Triamingehalt verarbeitet werden können. Die Herstellung teilaromatischer Copolyamide mit z.B. niedrigem Triamingehalt kann nach den in den EP-A 129 195 und 129 196 beschriebenen Verfahren erfolgen.

Die nachfolgende nicht abschließende Aufstellung enthält die genannten, so wie weitere Polyamide im Sinne der Erfindung (in Klammern sind die Monomeren angegeben):

PA 46 (Tetramethylendiamin, Adipinsäure)
PA 66 (Hexamethylendiamin, Adipinsäure)
PA 69 (Hexamethylendiamin,Azelainsäure)
PA 610 (Hexamethylendiamin, Sebacinsäure)
PA 612 (Hexamethylendiamin, Decandicarbonsäure)
PA 613 (Hexamethylendiamin, Undecandicarbonsäure)
PA 1212 (1,12-Dodecandiamin, Decandicarbonsäure)
PA 1313 (1,13-Diaminotridecan, Undecandicarbonsäure)
PA MXD6 (m-Xylylendiamin, Adipinsäure)
PA TMDT (Trimethylhexamethylendiamin, Terephthalsäure)
PA 4 (Pyrrolidon)
PA 6 (ε-Caprolactam)
PA 7 (Ethanolactam)
PA 8 (Capryllactam)
PA 9 (9-Aminounddecansäure)
PA 12 (Laurinlactam)

Diese Polyamide und ihre Herstellung sind bekannt. Einzelheiten zu ihrer Herstellung findet der Fachmann in Ullmanns Encyklopädie der Technischen Chemie, 4. Auflage, Bd. 19, S. 39-54, Verlag Chemie, Weinmann 1980, sowie Ullmanns Encyclopedia of Industrial Chemistry, Vol. A21, S. 179-206, VCH Verlag, Weinheim 1992, sowie Stoeckhert, Kunststofflexikon, S. 425-428, Hanser Verlag München 1992 (Stichwort "Polyamide" und folgende).

Besonders bevorzugt werden Polyamid-6, Polyamid-66 oder MXD6-Polyamid (Adipinsäure/m-Xylylendiamin) eingesetzt.

Ionische Lösungsmittel

Die synthetischen Polyamide werden in beliebigen geeigneten ionischen Flüssigkeiten gelöst, die ein hinreichendes Lösevermögen für die Polymere und eine hinreichende thermische Beständigkeit aufweisen. Geeignete ionische Flüssigkeiten sind beispielsweise in US-A-2005 0288 484 und WO 02/079269 beschrieben.

Ionische Flüssigkeiten sind eine Gruppe von Lösungsmitteln, die aus Anionen und Kationen aufgebaut sind, im Gegensatz zu traditionellen organischen oder wässrigen Lösungsmitteln, die nicht-ionische Moleküle sind. Ionische Flüssigkeiten werden zunehmend eingesetzt, um übliche verdampfbare organische Verbindungen zu ersetzen. Ionische Flüssigkeiten sind typischerweise aus einem organischen Kation aufgebaut, das häufig durch Alkylierung einer Verbindung erhalten wird, beispielsweise von Imidazolen, Pyrazolen, Thiazolen, Isothiazolen, Azathiazolen, Oxothiazolen, Oxazinen, Oxazolinen, Oxazaborolen, Dithiozolen, Triazolen, Selenozolen, Oxaphospholen, Pyrrolen, Borolen, Furanen, Thiophenen, Phospholen, Pentazolen, Indolen, Indolinen, Oxazolen, Isoxazolen, Isotriazolen, Tetrazolen, Benzofuranen, Dibenzofuranen, Benzothiophenen, Dibenzothiophenen, Thiadiazolen, Pyridinen, Pyrimidinen, Pyrazinen, Pyridazinen, Piperazinen, Piperidinen, Morpholonen, Pyranen, Anolinen, Phthalazinen, Quinazolinen, Quinoxalinen und Kombinationen davon.

Der anionische Teil der ionischen Flüssigkeit kann aus anorganischen oder organischen Anionen aufgebaut sein. Typische Beispiele hierfür sind Halogenide, $BX_4^-$, $PF_6^-$, $AsF_6^-$, $SbF_6^-$, $NO_2^-$, $NO_3^-$, $SO_4^{2-}$, $BR_4^-$, substituierte oder unsubstituierte Carborane, substituierte oder unsubstituierte Metallocarborane, Phosphate, Phosphite, Polyoxometalate, substituierte oder unsubstituierte Carboxylate wie Acetat, Triflate und nicht koordinierende Anionen. Dabei kann R Wasserstoff, Alkyl, substituiertes Alkyl, Cycloalkyl, substituiertes Cycloalkyl, Heteroalkyl, Heterocycloalkyl, substituiertes Heterocycloalkyl, Aryl, substituiertes Aryl, Heteroaryl, substituiertes Heteroaryl, Alkoxy- Aryloxy, Acyl, Silyl, Boryl, Phosphino, Amino, Thio, Seleno und Kombinationen davon umfassen. Durch Veränderung der Kombination von Kationen und Anionen ist es möglich, die ionische Flüssigkeit mit den gewünschten Lösungseigenschaften für ein spezifisches thermoplastisches Polymer einzustellen.

Ionische Flüssigkeiten haben ein komplexeres Lösungsverhalten im Vergleich zu traditionellen wässrigen und organischen Lösungsmitteln, da ionische Flüssigkeiten Salze sind und keine molekularen nichtionischen Lösungsmittel. Für Wechselwirkungen zwischen ionischen Flüssigkeiten und gelösten Polymeren kann auf US-A-2005 0288 484, Absatz [0039], verwiesen werden. Ionische Flüssigkeiten sind vorzugsweise in einem Temperaturbereich von -70 bis 300°C in der flüssigen Phase vorliegend. Die Temperaturbeständigkeit sollte vorzugsweise mindestens 100°C, vorzugsweise mindestens 150°C, insbesondere mindestens 170°C betragen. Polyamid-6-Granulat wird beispielsweise bei einer Temperatur von 170°C gelöst, um eine 20 Gew.-%.-ige Lösung zu erhalten. Das Kation kann beispielsweise einen einzigen fünfgliedrigen Ring aufweisen, der nicht an andere Ringstrukturen gebunden ist. Ein Beispiel hierfür ist ein Imidazoliumkation. In diesem Fall kann das Anion der ionischen Flüssigkeit ein Halogen oder Pseudohalogen sein. Für eine weitere Beschreibung kann auf US-A-2005 0288 484, Absätze [0055] bis [0062] verwiesen werden.

Raumtemperatur-ionische Flüssigkeiten, die erfindungsgemäß eingesetzt werden könnein, sind beispielsweise in der WO 02/079269 auf den Seiten 13 bis 16 beschrieben. Dort werden als Kationen beispielsweise große, asymmetrische organische Kationen wie N-Alkylpyridinium, Alkylammonium, Alkylphosphonium und NN'-Dialkylimidazolium angegeben. Bevorzugt weisen die ionischen Flüssigkeiten eine hohe Stabilität auf und haben besonders bevorzugt eine Zersetzungstemperatur oberhalb von 400°C. Beispielsweise haben Dialkylimidazolium und Alkylpyridinium derartig hohe Zersetzungstemperaturen. Besonders bevorzugt können dabei 1-Alkyl-3-methylimidazoliumsalze eingesetzt werden, wobei beispielsweise $PF_6^-$ ein geeignetes Gegenion ist.

Weitere geeignete ionische Flüssigkeiten sind in der prioritätsälteren, nicht vorveröffentlichten PCT/EP 2007/060881 beschrieben.

Für weitere Beschreibungen von ionischen Flüssigkeiten kann auf Angew. Chem. 2000, 112, 3926 bis 3945, K. N. Marsh et al., Fluid Phase Equilibria 219 (2004), 93 bis 98 und J. G. Huddleston et al., Green Chemistry 2001, 3, 156 bis 164 wie auch DE-A-102 02 838, WO 2005/019137, WO 2005/007657, WO 03/029329, WO 2004/084627, WO 2005/017001 und WO 2005/017252 verwiesen werden. Beispielsweise sind in der WO 2005/007657 Salze von 1,5-Diazabicyclo[4.3.0]non-5-en (DBN) und 1,4-Diazabicylco[5.4.0]undec-7-en (DBU) beschrieben. In der WO 2004/084627 sind beispielsweise als Kationen cyclische Aminbasen wie Pyridinium, Pyridazinium, Pyrimidinium, Pyrazinium, Imidazolium, Pyrazolium, Oxazolium, 1,2,3- und 1,2,4-Triazolium, Thiazolium, Piperidinium, Pyrrolidinium, Quinolinium und Isoquinolinium beschrieben. Geeignete Gegenionen für 1,8-Diazabicyclo[5.4.0]undec-7-enium (DBU) sind beispielsweise Chlorid, Methansulfonat, Formiat, Acetat, Tosylat, Trifluoroacetat, Saccharinat, Hydrogensulfat, Lactathiocyanat, und Trifluormethansulfamat. Das DBU-Ion kann beispielsweise durch $C_{1-12}$-Alkylreste, insbesondere $C_{4-8}$-Alkylreste substituiert sein. Beispielsweise kann 8-Butyl-DBU oder 8-Octyl-DBU als Kation eingesetzt werden.

Besonders bevorzugt werden erfindungsgemäß, in der ionischen Flüssigkeit als Kation gegebenenfalls substituierte Imidazoliumkationen, gegebenenfalls substituierte 1,8-Diazabicyclo[5.4.0]undec-7-eniumkationen oder Gemische davon eingesetzt. Als Substituenten kommen insbesondere Alkylsubstituenten in Frage, beispielsweise $C_{1-10}$-Alkylsubstituenten. Für Imidazoliumionen kommen bevorzugt $C_{1-4}$-Alkylsubstituenten, insbesondere Ethyl- und Methylsubstituenten in Frage. Besonders bevorzugt wird in diesem Fall Ethylmethylimidazolium (EMIM) als Kation eingesetzt. Ferner kann bevorzugt Butylmethylimidazolium (BMIM) als Kation eingesetzt werden. Bei 1,8-Diazabicyclo[5.4.0]undec-7-eniumkationen werden bevorzugt $C_{3-10}$-Alkylsubstituenten, insbesondere $C_{4-8}$-Alkylsubstituenten eingesetzt. Besonders bevorzugt sind hierbei 8-Butyl-DBU und 8-Octyl-DBU sowie Gemische davon.

Als Anionen für die Imidazoliumsalze können die vorstehend beschriebenen Anionen eingesetzt werden. Bevorzugte Gegenionen sind vorzugsweise ausgewählt aus Halogenid, gegebenenfalls substituiertem $C_{1-4}$-Carboxylat wie Acetat, Phosphat, $C_{1-4}$-Alkylphosphat, Di-$C_{1-4}$-Alkylphosphat, $C_{1-4}$-Alkylsulfonat, Hydrogensulfat oder Gemischen davon oder Ethylmethylimidazoliumacetat (EMIM Acetat).

Besonders bevorzugt ist die ionische Flüssigkeit Ethylmethylimidazolium-diethylphosphat (EMIM DEP) und Methylmethylimidazoliumdimethylphosphat (MMIM DMP) oder Gemische davon.

Die ionische Flüssigkeit kann auch Wasser in geringeren Anteilen enthalten. Beispielsweise kann der Wassergehalt in der ionischen Flüssigkeit 0 bis 10 Gew.-% betragen.

Die Temperaturbeständigkeit der ionischen Flüssigkeit wird in Abhängigkeit vom Fliessverhalten der Lösung des Polymers in der ionischen Flüssigkeit gewählt. Da die Verarbeitung der Polymerlösung in der ionischen Flüssigkeit eine Flüssigphase voraussetzt, muss die Lösung gegebenenfalls erhitzt werden, um sie in flüssigem Zustand zu halten. Vorzugsweise beträgt die Temperaturbeständigkeit der ionischen Flüssigkeit etwa 200°C bzw. 150°C für hohe Konzentrationen. Derart erhöhte Temperaturen sind in diesem Fall häufig notwendig, um die Lösung des thermoplastischen Polymers in der ionischen Flüssigkeit flüssig zu halten. Die Konzentration des thermoplastischen Polymers in der ionischen Flüssigkeit kann in weiten Bereichen frei gewählt werden. Vor-zugsweise beträgt sie 10 bis 40 Gew.-%, insbesondere 15 bis 30 Gew.-%.

Zur Herstellung der Polymerlösung wird vorzugsweise Polymergranulat in die ionische Flüssigkeit bei einer geeigneten Lösungstemperatur unter Rühren eingebracht. Es ist auch möglich, eine Schmelze des Polymers in die ionische Flüssigkeit einzubringen. Die Herstellung von Lösungen thermoplastischer Polymere in ionischen Flüssigkeiten ist prinzipiell aus dem eingangs beschriebenen Stand der Technik bekannt, wobei sich die dortigen Beispiele nicht auf Polyamid beziehen.

Die Viskosität insbesondere einer Lösung von Polyamid in einer ionischen Flüssigkeit kann in weiten Bereichen frei gewählt werden.

Ferner können bevorzugt Polyamide aus Dicarbonsäuren und Diaminen eingesetzt werden, insbesondere solche aus $C_{4-10}$-Dicarbonsäuren und $C_{4-10}$-Diaminen, hierbei wird insbesondere Polyamid-66 eingesetzt..

Es können auch Mischungen von Polymeren eingesetzt werden. Das synthetische Polymer kann so z. B. mit einem Polymer in Lösung gemischt werden, insbesondere als Blend mit Biopolymeren.

Die Herstellung erfindungsgemäßer poröser Strukturen in Form von Fasern erfolgt im Nassspinnverfahren aus dem gelösten Polyamid, durch Fällung in einem protischen Lösungsmittel, beispielsweise Wasser, einem $C_{1-4}$-Alkanol oder Gemischen davon und nachfolgendes Gefriertrocknen. Dabei beträgt die Verarbeitungstemperatur beim Verspinnen 10 bis 250 °C, vorzugsweise 80 bis 200°C, besonders bevorzugt 90 bis 150°C, insbesondere bei der Verarbeitung von Polyamid-6.

Das Nassspinnverfahren kann in beliebiger geeigneter Weise durchgeführt werden. Für eine nähere Beschreibung kann beispielsweise auf B. Falkai, Synthesefasern - Grundlagen, Technologie, Verarbeitung und Anwendung, Verlag Chemie, Weinheim 1981, S. 87 bis 137 verwiesen werden.

Die Spinngeschwindigkeit (Abzugsgeschwindigkeit) beträgt vorzugsweise 10 bis 500 m/min, besonders bevorzugt 20 bis 250 m/min, insbesondere 150 bis 250 m/min.

Die Spinndüse weist dabei vorzugsweise Löcher mit einem Durchmesser von 40 bis 400 $\mu$m auf.

Zwischen der Düse und dem Koagulationsbad wird gemäß einer Verfahrensvariante vorzugsweise ein Luftspalt vorgesehen, der beispielsweise eine Länge von 0,5 bis 10 cm, vorzugsweise 1 bis 6,5 cm, besonders bevorzugt etwa 1 cm aufweisen kann. Als Koagulationsbad wird vorzugsweise ein Fällbad mit einem polaren Fällmedium, z. B. Wasser, eingesetzt, das beispielsweise Umgebungstemperatur hat. Für Polyamid-6 beträgt die Spinntemperatur vorzugsweise 125 bis 150°C.

Nach der Koagulation und Entfernung der IL vorzugsweise in einem Waschbad enthaltend vorzugsweise Wasser, Alkohole oder polare Lösungsmittel wird die erhaltene Faser getrocknet. Dabei wird erfindungsgemäß eine Gefriertrocknung durchgeführt, durch die es zum einen möglich ist, ein Verkleben der Fasern bei der Trocknung zu verhindern, und um zum anderen die Ausbildung der porösen Struktur zu fördern. Insbesondere für hoch poröse Polyamide können sehr hohe Wasserrückhaltewerte (WRV) von bis zu 300% in den Fasern beobachtet werden. Die Faser kann im Prozess nach der Koagulation vor und bzw. oder nach dem Auswaschen verstreckt werden. Zusätzlich ist ein Verstrecken beim Trocknen möglich. Die Verstreckung kann an Luft, in einem Verstreckbad, auf einer Heizschiene, zwischen beheizten Galetten oder in einem Heizkanal erfolgen.

Die ionische Flüssigkeit kann vom Fällmedium z. B. destillativ abgetrennt und dann zurückgeführt werden.

Die erhaltenen Fasern weisen vorzugsweise folgendes Eigenschaftsprofil auf:

Die Fasern weisen einen offenzelligen Schaum auf, der je nach Fällung auch an der Oberfläche offenzellig oder geschlossen sein kann, wobei im letzten Fall Poren vorliegen. Es bilden sich Stege aus, da die ionische Flüssigkeit Wasser aufnimmt und sich das Polyamid in dem Gemisch nicht mehr löst. Insbesondere durch Behandlung der Oberfläche mit Wasserdampf wird eine oberflächlich offenzellige Struktur erhalten, während durch Behandlung im Wasserbad eine nahezu geschlossene Oberfläche erhalten wird.

Die Stegbreite im offenzelligen Schaum beträgt vorzugsweise 10 bis 500 nm, besonders bevorzugt 20 bis 300 nm, insbesondere 50 bis 100 nm. Der mittlere Porendurchmesser bzw. die Kanalgröße beträgt vorzugsweise 10 bis 2000 nm, besonders bevorzugt 50 bis 500 nm, insbesondere 100 bis 200 nm.

Das Wasserrückhaltevermögen beträgt vorzugsweise 100 bis 1000%, besonders bevorzugt 150 bis 500 %, insbesondere 200 bis 400 %. Das Wasserrückhaltevermögen wird dabei nach DIN 53814 bestimmt.

Die Wasserdampfsorption (WDS) beträgt vorzugsweise 2,0 bis 4,0 % bei 20°C und 65% Luftfeuchtigkeit. Für die Messung werden die Fasern oder Filme 1 Tag bei 20°C und 65% rel. Luftfeuchtigkeit aufbewahrt, dann gewogen, bei 105°C 2 Stunden getrocknet, und die adsorbierte Wassermenge wird gravimetrisch bis zur Gewichtskonstanz ermittelt.

$$WDS\% = (m_{klimatisiert} - m_{trocken}) / m_{trocken}$$

An Folien und Beschichtungen wurden zusätzlich folgende Werte bestimmt: Die Wasserdampfdurchlässigkeit nach DIN 53122 ist vorzugsweise 1000 bis 4000 g/m$^2$ Tag.

Die innere Oberfläche ist vorzugsweise > als 10 m$^2$/g, besonders bevorzugt 50 bis 300 m$^2$/g. Sie wird bestimmt durch Quecksilber-Porosimetrie.

Die Festigkeit beträgt vorzugsweise 1 bis 30 cN/tex, besonders bevorzugt 5 bis 20 cN/tex.

Die Bruchdehnung beträgt vorzugsweise 5 bis 300 %, besonders bevorzugt 10 bis 200 %.

Es kann ein Titer in weiten Bereichen eingestellt werden. Bevorzugt sind Einzelfilamenttiter im Bereich von 0,5 bis 4000 dtex.

Die Fasern können zu beliebigen textilen Erzeugnissen weiterverarbeitet werden, beispielsweise zu Vliesen, Geweben, Gewirken, usw.

Derartige Gewebe zeichnen sich durch gute Eigenschaften bezüglich Luftdurchlässigkeit, Wasserdampfsorption, Wasserdichtheit und Wasserdampfdurchlässigkeit aus, so dass sie zur Herstellung von Textilien für den Outdoor-Bereich gut geeignet sind.

Folien, Filme oder Beschichtungen werden erfindungsgemäß durch Aufrakeln des gelösten, Polyamids auf eine Substratfläche, gegebenenfalls Besprühen mit einem protischen Lösungsmittel, beispielsweise Wasser, einem C$_{1-4}$-Alkanol oder Gemischen davon, Eintauchen in ein Fällungs- oder Koagulationsbad, nachfolgendes Gefriertrocknen der erhaltenen Folie, des Films oder des beschichteten Substrats, hergestellt.

Ggf. erfolgt ein Verstrecken der Folie, ähnlich der Nachbehandlung der Fasern.

Die Auftragtemperatur beträgt dabei vorzugsweise 0 bis 250 °C, besonders bevorzugt 20 bis 200 °C.

Die Dicke erfindungsgemäß hergestellter Folien oder Filme ist einstellbar und beträgt der Anwendung entsprechend vorzugsweise 5 bis 1000 $\mu$m, besonders bevorzugt 10 bis 100 $\mu$m.

In einer bevorzugten Ausführungsform kann bei der Filmherstellung zunächst mit einem protischen Lösungsmittel, beispielsweise Wasser, einem C$_{1-4}$-Alkanol oder Gemischen davon bedampft werden, bevor die Koagulation in einem Koagulationsbad, in der Regel enthaltend ein protisches Lösungsmittel, beispielsweise Wasser, einen C$_{1-4}$-Alkanol oder Gemische davon, erfolgt. Um weitestgehend geschlossene Oberflächen zu erhalten, wird sofort in das Koagulationsbad getaucht.

Bereits der Film mit weitgehend geschlossenporiger Oberfläche zeichnet sich durch eine hohe Luftdurchlässigkeit aus, die sich für den offenporigen Film noch verstärkt.

Bei der Herstellung wird erfindungsgemäß gefriergetrocknet. Neben Wasser als Fällungsmittel können gemäß einer Ausführungsform der Erfindung auch kurzkettige Alkohole, z. B. Ethanol als Fällungsmittel eingesetzt werden. Auch unter Einsatz derartiger Alkohole lassen sich die Filme koagulieren. Neben dem verfahrenstechnischen Vorteil, einer verzögerten Koagulation im Vergleich zu Wasser ist ein weiterer Vorteil von Alkohol das vereinfachte Recycling der eingesetzten ionischen Flüssigkeiten. Die Aufarbeitung der ionischen Flüssigkeiten wird vereinfacht, da die ionische Flüssigkeit aufgrund der leichter siedenden Alkohole leichter zu trocknen ist. Zur Herstellung poröser Strukturen, die sich durch eine weitgehend poröse Oberfläche auszeichnen, ist es vorteilhaft, den z. B. aus einer wie beschrieben heißen Lösung auf eine heiße Glasplatte gerakelten Film für einen Zeitraum im Bereich von 1 bis 20 Minuten, vorzugsweise 2 bis 10 Minuten, insbesondere 3 bis 7 Minuten mit Wasserdampf zu behandeln und erst anschließend in ein Fäll- bzw. Koagulationsbad zu tauchen. Ein derart hergestellter Film, der gefriergetrocknet wurde, zeigt die beschriebene poröse Struktur im Inneren und zeichnet sich zusätzlich durch eine offenporige Oberfläche aus.

Zur Herstellung poröser Beschichtungen wird die Lösung eines vorzugsweise polaren Polymers, wie es vorstehend beschrieben ist, auf ein Gewebe, Gewirke oder ein Vlies gerakelt, welches beispielsweise aus Polyamid, Polyester, Polypropylen oder einer anderen Synthese- oder Naturfaser bestehen kann. Das gelöste polare Polymer wird dann durch Besprühen mit Wasser, Alkohol oder einer Mischung aus beiden, gegebenenfalls unter Zusatz von ionischen Flüssigkeiten, besprüht und anschließend in ein Fäll- bzw. Koagulationsbad getaucht. Dabei fällt wiederum das Polymer aus, und die so erhaltene Beschichtung zeichnet sich durch eine gute Gewebeanbindung aus. Die Beschichtung zeigt eine gleichmäßig poröse Struktur, ähnlich oder gleich der vorstehend bei Fasern beschriebenen Struktur. Beispielsweise ist es möglich, durch die erfindungsgemäße Beschichtung eines Polypropylengewebes das an sich hydrophobe Gewebe hydrophil zu funktionalisieren.

Gerade durch die Beschichtung von Geweben können die Luftdurchlässigkeit, Wasserdampfsorption, Wasserdichtheit und Wasserdampfdurchlässigkeit so eingestellt werden, dass sich die Eigenschaften eines Funktionstextils wie Goretex® oder Sympatex® einstellen. Die Eigenschaften dieser Membranen können zudem übertroffen werden.

Die Auftragsstärke liegt dabei vorzugsweise im Bereich von 5 bis 500 $\mu$m, besonders bevorzugt 10 bis 400 $\mu$m, insbesondere 20 bis 200 $\mu$m.

Bei derart beschichteten Geweben wird vorzugsweise eine Luftdurchlässigkeit gemäß DIN 53887 im Bereich von 0 bis 4 l m$^{-2}$s$^{-1}$, besonders bevorzugt 0,01 bis 2 l m$^{-2}$ s$^{-1}$ erhalten.

Bei derartigen Geweben beträgt die Wasserdampfsorption bei 20°C und 65% Luftfeuchtigkeit vorzugsweise 2 bis 4 %. Die Wasserdampfdurchlässigkeit beträgt vorzugsweise 1000 bis 4000 g m$^{-2}$ pro Tag, besonders bevorzugt 1500 bis 3000 g m$^{-2}$ pro Tag.

Die erfindungsgemäß erreichbare Mikroporosität der durch einen Koagulationsprozess hergestellten Polyamid-Beschichtungen öffnet neue Perspektiven für Beschichtungen auf Basis synthetischer Polymere. Im Bereich der Funktionsbekleidung können Hydrophil-Beschichtungen aus Polyamid viele der von gängigen Hydrophil-Beschichtungen bekannten Nachteile umgehen. Insbesondere kann das Feuchtigkeitsmanagement verbessert werden, die Scheuerbeständigkeit kann erhöht werden, das Anschmutzen durch Migration kann vermindert werden und Probleme mit der Anhaftung und der Einstellung einer optimalen Rheologie für Beschichtungspasten werden vermieden.

Erfindungsgemäß können auch Glasfasern oder andere technische Fasern zum Zwecke einer besseren Haftvermittlung mit den erfindungsgemäßen porösen Strukturen, insbesondere Polyamiden, beschichtet werden.

Ferner ist es auch möglich, die zur Faserherstellung, Film- und Folienherstellung oder zur Beschichtung eingesetzten Polymere, insbesondere Polyamide, chemisch zu modifizieren oder zu funktionalisieren. Hierdurch können beispielsweise Anhaftungs- und Hydrophilie-Eigenschaften modifiziert werden. Eine Modifikation kann dabei bereits bei der Polyamid-Herstellung oder in der Polyamidlösung in der ionischen Flüssigkeit erfolgen. Es ist beispielsweise möglich, Polyamid-Beschichtungen durch Verankerung von Cyclodextinen mittels bekannter Reaktivanker auf Triazin-Basis oder weitere als Speichermedien für Wirkstoffe dienende Substanzen zu modifizieren.

Die erfindungsgemäßen porösen Strukturen können in einer Vielzahl von Anwendungen eingesetzt werden. Sie können beispielsweise zur Herstellung von Membranen, Filtern, Schlichten, Haftgrundierungen, Trägermaterialien, Hygieneartikeln, Isoliermaterialien und zur Ausrüstung von Textilien eingesetzt werden. Beispielsweise können die porösen Strukturen als Träger für funktionale Gruppen oder beispielsweise Katalysatoren, Adsorbermoleküle, usw., eingesetzt werden. Sie können zudem auch zur Desorption von Wirkstoffen eingesetzt werden. Ein weiteres Anwendungsgebiet ist der Einsatz als Glasfaserschlichte.

Beispielsweise können mit den erfindungsgemäßen porösen Strukturen Oberflächen hydrophilisiert werden, beispielsweise durch Beschichtung von Geweben, Filmen, usw. Die porösen Strukturen mit offener Oberflächenstruktur sind als Filtermedium für Gase geeignet, wobei sich insbesondere die ausgezeichneten Eigenschaften eines Engineering plastics, z. B. die hohe Gebrauchstemperatur, als vorteilhaft erweisen. Filme mit offener Oberflächenstruktur können als Filtermedium für Flüssigkeiten eingesetzt werden. Die poröse Struktur kann als Schlichte zur Beschichtung von Verstärkungsfasern vor der Verwendung in Faserverbundwerkstoffen, insbesondere vor der Verwendung in faserverstärktem Polyamid, eingesetzt werden. Die porösen Strukturen können als Speicher mit großer innerer Oberfläche zur Freisetzung von Wirkstoffen dienen, oder auch als Adsorbens mit großer innerer Oberfläche zur Aufnahme von Verunreinigungen.

Die Erfindung wird durch die nachstehenden Beispiele näher erläutert.

Beispiele

Herstellung von Polymerlösungen

Die Herstellung der Polymerlösungen in den ionischen Flüssigkeiten erfolgte durch Einbringen der entsprechenden Menge bei der in der nachstehenden Tabelle angegebenen Temperatur. Es konnten jeweils stabile Lösungen erhalten werden.

| Ionische Flüssigkeit | Polymer | Konzentration in Gew.-% | Temperatur |
|---|---|---|---|
| MeDBU(+) Me2PO4(-) | Polyamid 6; RV 5,0 | 20 | 120 |
| | Polyamid 6; RV 2,4 | 15 | 90 |
| | Polyamid 6; RV 2,4 | 25 | 120 |
| | Polyamid 66; RV 2,7 | 15 | 120 |
| | Polyamid 6/6T; VZ 130 (0,5 %-ig in 96 % $H_2SO_4$ | 30 | 90 |
| | MXD6, RV 3,1 | 30 | 90 |
| | Polyethersulfon (PES)* | 20 | 90 |
| | | | |
| EMIM-DEP | Polyamid 6/6T; VZ 130 (0,5 %-ig in 96 % $H_2SO_4$ | 20 | 110 |
| | Polyamid 6; RV 5,0 | 20 | 120 |
| | MXD6 | 35 | 110 |
| | Polyamid 6; RV 5,0 | 30 | 170 |
| | | | |
| BMIM-Cl | Polyamid 6/6T; VZ 130 (0,5 %-ig in 96 % $H_2SO_4$ | 25 | 150 |
| | MXD6, RV 3,1 | 45 | 150 |
| | | | |
| BMIM-Acetat | Polyamid 6; RV 5,0 | 5 | 100 |
| | Polyamid 6; RV 2,4 | 5 | 100 |
| | Polyamid 6/6T; VZ 130 (0,5 %-ig in 96 % $H_2SO_4$ | 20 | 100 |
| | MXD6 | 40 | 110 |
| | | | |
| BMIM-Me2PO4 | Polyamid 6; RV 5,0 | 10 | 150 |
| | Polyamid 6; RV 2,4 | 15 | 150 |
| * nicht erfindungsgemäß | | | |

Die Lösungstemperatur wurde an die jeweils gelöste Polymermenge angepasst. Zur Lösung im Labormaßstab wurde das Lösungsmittel in einem Zweihals-Rundkolben, der mit einem KPG-Rührwerk ausgestattet war, vorgelegt. Das Polyamid wurde unter Rühren während 10 Min. zugegeben und suspendiert. Die Lösetemperatur wurde sodann mit einem Ölbad innerhalb eines Zeitraums von 30 Minuten eingestellt. Sodann wurde bei der Wunschtemperatur für drei Stunden mit 160 Umdrehungen/min gerührt. Es folgten eine Heißfiltration, eine Entgasung unter vermindertem Druck und die Lagerung bei Umgebungstemperatur. Da praktisch keine Filterrückstände vorhanden waren, wurde im weiteren Verlauf auf die Filtration verzichtet. Die Lösungen zeigten im Bereich der Lösetemperatur strukturviskose Eigenschaften und konnten problemlos gehandhabt, beispielsweise umgefüllt und verarbeitet werden. EMIM DEP erwies sich aufgrund seiner Stabilität und Lösekraft als hervorragend geeignetes Lösemittel zur Verarbeitung unterschiedlicher Polyamid-Typen.

Verspinnung

Zum Verspinnen wurde eine Kolbenspinn-Anlage mit einem Volumen von 100 ml und einem Metallsieb 40-5 μm als Filter eingesetzt. Es wurde eine Spinndüse 28 L/80 μm eingesetzt, und der Luftspalt betrug 1 cm. Es wurde ein Koagulationsbad mit zwei Umlenkrollen (80 cm) eingesetzt, das Wasser mit einer Temperatur von 20°C enthielt. Abzugsgalette und Verstreckgalette konnten mit variablen Geschwindigkeiten betrieben werden, wobei als Verstreckbad Wasser mit einer Temperatur von 80°C eingesetzt wurde. Die Länge des Verstreckbades betrug 1 m. Nachfolgend konnte auf einer Trockengalette bei 60°C getrocknet werden, alternativ durch Gefriertrocknung.

Die Spinntemperatur zum Verspinnen von Polyamid-6 betrug bis zu 170°C. Die Fasern wurden typischerweise mit einer Geschwindigkeit von 60 m/min. direkt nach der Koagulation abgezogen. Als Trocknung wurde neben der Galette typischerweise die Gefriertrocknung eingesetzt.

Tabelle 1: Fasereigenschaften in Abhängigkeit von den Spinnparametern

| Versuch | 1 | 2 | 3 | 4 |
|---|---|---|---|---|
| **Experimentelles** | | | | |
| PA-Type | Polyamid-6 | Polyamid-6 | Polyamid-6 | Polyamid-6 |
| Lösungskonzentrat. [Gew.-%] | 20 | 20 | 20 | 20 |
| Düse | 28/80 | 28/80 | 28/80 | 28/100 |
| Spinntemperatur | 150°C | 150°C | 150°C | 125°C |
| Luftspalt | 1 cm | 1 cm | 1 cm | 1 cm |
| V1 [m/min] | 10 | 60 | 13,5 | 6,5 |
| V2 [m/min] | | | | 20 |
| Verstreckung [%] | | | | 207 |
| Auswaschen IL | über Nacht | über Nacht | über Nacht | In Verstreckbad |
| Trocknungsart | Gefriertrockner | Gefriertrockner | Gefriertrockner | Galette 60°C, online |
| **Fasereigenschaften** | | | | |
| Titer [dtex] | 442 | 175 | 342 | 210 |
| Festigkeit [cN/tex] | 3,1 | 5,1 | 2,4 | 21,2 |
| Bruchdehnung [%] | 43 | 17 | 92 | 23 |
| WRV [%] | 234 | 210 | 264 | 44 |

Wie die Ergebnisse zeigen, werden bei den Versuchen 1 bis 3 hochporöse Fasern erhalten. Dies kann unter anderem auf die Gefriertrocknung zurückzuführen sein. Bei der Gefriertrocknung können Mikroporen, die bei der Koagulation entstehen können, aufgeweitet und in diesem Stadium fixiert werden. Die erzielbaren Wasserrückhaltewerte (WRV) von bis zu 300% sind für Polyamid bemerkenswert.

Die erfindungsgemäß erhaltenen Polyamide wurden einer Röntgenstruktur-Untersuchung unterzogen. Dabei stellte sich heraus, dass vorwiegend die δ-Phase gebildet wurde. Alternativ konnte im Nachspinnverfahren auch eine Trocknung im Heizkanal bei 200°C durchgeführt werden. Bei einer Verstreckung im Heizkanal finden sich Anteile der α-Modifikation neben der δ-Phase.

**Herstellung von Folien und Beschichtungen**

Polyamid-6 mit einer relativen Viskosität RV von 5,0 wurde in einer Konzentration von 20 Gew.-% bei 170°C in EMIM DEP gelöst und auf eine vorgeheizte Glasplatte gerakelt. Die Glasplatte wurde auf Raumtemperatur abgekühlt und die Proben in einem Fäll- bzw. Koagulationsbad bei RT koaguliert und ausgewaschen. Die ausgewaschenen Proben wurden an der Luft, im Gefriertrockner oder im Trockenschrank bei 60°C getrocknet.

In allen Fällen wurde die erfindungsgemäße poröse Struktur erhalten.

Alternativ wurde als Fällungsmittel Ethanol eingesetzt. Auch mit Ethanol ließen sich die Filme unter Ausbildung der porösen Struktur koagulieren. Der koagulierte Film wurde gefriergetrocknet und wies ebenfalls eine ausgezeichnete poröse Struktur auf. Tab. 2 gibt einen Überblick über die untersuchten Films.

Tabelle 2:

| Probe | Koagulation/Trocknung | Auftragsstärke ($\mu$m) | Filmdicke (nm) |
|---|---|---|---|
| 20% PA 6 | $H_2O$/Eth./gefr. | 60 | 11 |
| | $H_2O$/Eth./Ofen 60°C | 60 | 21 |
| | $H_2O$/Ofen 60°C | 200 | 80 |
| | $H_2O$/Luft | 100 | 13 |
| | $H_2O$/Eth./Luft | 60 | 20 |
| | $H_2O$/gefr. | 100 | 22 |
| | $H_2O$/gefr. | 60 | 16 |
| | | | |
| 10% PA 6.6 | $H_2O$/Eth./Luft | 400 | 160 |
| | $H_2O$/Luf | 400 | 70 |
| | $H_2O$/Luft | 60 | 10 |
| | $H_2O$/gefr. | 400 | 130 |
| | $H_2O$/gefr. | 60 | 40 |

**Charakterisierung der Filme:**

1. Luftdurchlässigkeit

Durchführung einer Luftdurchlässigkeitsprüfung nach DIN 53887.

Tabelle 3: Luftdurchlässigkeit der Filme

| Probe | Koagulation/Trocknung | LFT (l/m$^2$/s) Mittelwert |
|---|---|---|
| 20% PA 6, 60 $\mu$m, 0.02 mm | $H_2O$/Ethanol/Luft | 0,05 |
| 20% PA 6, 60 $\mu$m, 0.016 mm | $H_2O$/gefriergetr. | 0,09 |
| 20% PA 6, 60 $\mu$m, 0.011 mm | $H_2O$/Ethanol/gefriergetr. | 0,01 |
| 10% PA 6.6, 400 $\mu$m, 0.16 mm | $H_2O$/Ethanol/Luft | 1,01 |
| 10% PA 6.6, 400 $\mu$m, 0.07 mm | $H_2O$/Luft | 0,02 |
| 10% PA 6.6, 400 $\mu$m, 0.13 mm | $H_2O$/gefriergetr. | 1,28 |

Die Folien bzw. Beschichtungen zeigen gute Barriereeigenschaften gegenüber Luft/Sauerstoff.

2. Wasserdampfsorption

Um die Affinität der Filme zu Wasserdampf quantitativ zu erfassen, wurde die Wasserdampfsorption bei 20°C und 65% Luftfeuchtigkeit bestimmt.

Tabelle 4: Wasserdampfsorption

| Probe | WDS (%) |
|---|---|
| | |
| PA-Filme | |
| 20% PA 6, $H_2O$/Eth./gefr., Auftragsdicke 60 $\mu$m, Filmdicke 0.011 mm | 2,84 |

(fortgesetzt)

| Probe | WDS (%) |
|---|---|
| 20% PA 6, $H_2O$/Eth./Ofen 60°C, Auftragsdicke 60 $\mu$m, Filmdicke 0.021 mm | 3,19 |
| 20% PA 6, $H_2O$/Luft, Auftragsdicke 100 $\mu$m, Filmdicke 0.013 mm | 3,25 |
| 20% PA 6, $H_2O$/Eth./Luft, Auftragsdicke 60 $\mu$m, Filmdicke 0.02 mm | 2,19 |
| 20% PA 6, $H_2O$/gefr., Auftragsdicke 100 $\mu$m, Filmdicke 0.022 mm | 2,3 |
| | |
| 10% PA 6.6, $H_2O$/Eth./Luft, Auftragsdicke 400 $\mu$m, Filmdicke 0.16 mm | 2,15 |
| 10% PA 6.6, $H_2O$/Luft, Auftragsdicke 400 $\mu$m; Filmdicke 0.07 mm | 2,82 |
| | |
| Cellulose-Filme | |
| 6% CEL EMIMAc, $H_2O$/Luft, 500 $\mu$m; Filmdicke 0.055 mm | 10,44 |
| 3% CEL EMIMCl, $H_2O$/Luft, 500 $\mu$m, Filmdicke 0.015 mm | 8,4 |
| 6% CEL HDBUAc, $H_2O$/Luft, 500 $\mu$m, Filmdicke 0.06 mm | 8,9 |
| Cellophan 0.025 mm | 8,2 |

Die PA-Filme weisen eine geringere Wasserdampfsorption als die CEL-Filme auf.

3. Wasserdampfdurchlässigkeit

Um eine Aussage über die Atmungsaktivität zu erhalten, wurde die WDD bestimmt.

Tabelle 5: Wasserdampfdurchlässigkeit

| Filme | WDD [$g/m^2$/24h] |
|---|---|
| 20% PA 6, $H_2O$/Eth./gefr., Auftragsdicke 60 $\mu$m, Filmdicke 0.011 mm | 3420 |
| 20% PA 6, $H_2O$/Eth./Ofen 60°C, Auftragsdicke 60 $\mu$m, Filmdicke 0.021 mm | 1922 |
| 20% PA 6, $H_2O$/Eth./Luft, Auftragsdicke 60 $\mu$m, Filmdicke 0.02 mm | 3011 |
| 20% PA 6, $H_2O$/gefr., Auftragsdicke 100 $\mu$m, Filmdicke 0.022 mm | 3094 |
| | |
| 10% PA 6.6, $H_2O$/Eth./Luft, Auftragsdicke 400 $\mu$m, Filmdicke 0.16 mm | 3790 |
| 10% PA 6.6, $H_2O$/Luft, Auftragsdicke 400 $\mu$m, Filmdicke 0.07 mm | 3337 |
| 10% PA 6.6, $H_2O$/gefr., Auftragsdicke 400 $\mu$m, Filmdicke 0.13 mm | 3381 |
| | |
| 6% CEL EMIMAc, $H_2O$/Luft, Auftragsdicke 500 $\mu$m, Filmdicke 0.05 mm | 3315 |
| Cellophan Filmdicke 0.025 mm | 179 |
| Sympatex® (Lit.) | 2500-2700 |
| Gore-Tex® (Lit.) | 4800-6900 |

4. Wasserdichtheit

Tabelle 6:

| Filme | d (mm) | Wasserdichtigkeit (cm Wassersäule) |
|---|---|---|
| 20% PA 6, $H_2O$/gefr., Auftragsstärke 60 $\mu$m | 0,020 | 40 |
| 20% PA 6, $H_2O$/Luft, Auftragsstärke 100 $\mu$m | 0,013 | 10 |
| | | |
| 10% PA 6.6, $H_2O$/gefr., Auftragsstärke 400 $\mu$m | 0,14 | 10 |
| 10% PA 6.6, $H_2O$/Eth./Luft, Auftragsstärke 400 $\mu$m | 0,17 | 10 |
| | | |
| Cellophan | 0,025 | > 160 |
| 6% CEL EMIMAc, $H_2O$/Luft, Auftragsstärke 500 $\mu$m | 0,055 mm | > 160 |
| PA-Filme zeigen keine Sperrwirkung gegenüber Feuchtigkeit im Gegensatz zu den untersuchten CEL-Filmen. | | |

Herstellung von Beschichtungen

Beschichtungsversuche wurden in Handversuchen mithilfe eines Streichrakel-Systems durchgeführt. Die Lösung von Polyamid-6 in EMIM DEP wurde bei 160°C in einem Trockenschrank auf ein vortemperiertes Gewebe aufgetragen. Dabei ist darauf zu achten, dass das zu beschichtende Gewebe nicht verrutscht. Aus diesem Grund wurde das Gewebe mit einem doppelseitigen Klebeband an den Rändern einer Glasplatte befestigt. Nach dem Herstellen der Beschichtung wurde die das Gewebe tragende Glasplatte auf Raumtemperatur abgekühlt. Die Proben wurden in demineralisiertem Wasser oder Ethanol bei Raumtemperatur koaguliert und ausgewaschen. Die ausgewaschenen Proben wurden an der Luft, im Gefriertrockner oder im Trockenschrank bei 60°C getrocknet. Als textile Gewebe wurden Polyestergewebe, Polypropylengewebe, Baumwollgewebe und Polyamidgewebe eingesetzt. An den Geweben wurden die Luftdurchlässigkeit, die Wasserdampfsorption, die Wasserdichtheit und die Wasserdampfdurchlässigkeit bestimmt. Die Morphologie der Beschichtungen wurde wie bei den Folien mittels REM untersucht.

Die Versuchsergebnisse sind nachstehend tabellarisch zusammengefasst.

Tabelle 7:

| Probe | Koagulation/Trocknung | Auftragsstärke ($\mu$m) | Filmdicke (mm) | Substrat |
|---|---|---|---|---|
| 10% PA 6.6 | $H_2O$/gefr. | 60 | 0,03 | PP |
| | $H_2O$/gefr. | 60 | 0,03 | PA |
| | $H_2O$/gefr. | 60 | 0,03 | PES |
| | | | | |
| 10% PA 6.6 | $H_2O$/Luft | 60 | 0,03 | PP |
| | $H_2O$/Luft | 60 | 0,03 | PA |
| | $H_2O$/Luft | 60 | 0,01 | PES |

**Charakterisierung der Beschichtungen:**

1. Luftdurchlässigkeit

Durchführung einer Luftdurchlässigkeitsprüfung nach DIN 53887.

Tabelle 8: Luftdurchlässigkeit der Beschichtungen

| Probe | Koagulation/Trocknung | Substrat | LFT (l/m$^2$/s) Mittelwert |
|---|---|---|---|
| 10% PA 6.6, 60$\mu$m | $H_2O$/gefriergetr. | PP | 1,44 |
| | | PES | 1,16 |

(fortgesetzt)

| Probe | Koagulation/Trocknung | Substrat | LFT (l/m²/s) Mittelwert |
|---|---|---|---|
| | | PA | 0,42 |
| | | | |
| 10% PA 6.6, 60 μm | $H_2O$/Luft | PP | 2,1 |
| | | PES | 0,11 |
| | | PA | 2,26 |
| | | | |
| Substrat/Gewebe | | PP | 254 |
| | | PES | 91,4 |
| | | PA | 87,1 |

2. Wasserdampfdurchlässigkeit

Um eine Aussage über die Atmungsaktivität zu erhalten, wurde die WDD bestimmt.

Tabelle 9: Wasserdampfdurchlässigkeit

| Beschichtungen | WDD [g/m²/24h] |
|---|---|
| Substrat PP | 3376 |
| Substrat PA | 3398 |
| Substrat PES | 3431 |
| | |
| Schichtdicke 0.03 mm | |
| 10% PA 6.6 $H_2O$/gefr. 60 μm, PP | 3326 |
| 10% PA 6.6 $H_2O$/gefr., 60 μm, PA | 3271 |
| 10% PA 6.6 $H_2O$/gefr., 60 μm, PES | 3425 |
| | |
| 10% PA 6.6 $H_2O$/Luft, 60 μm, PP | 3110 |
| 10% PA 6.6 $H_2O$/Luft, 60 μm, PA | 3110 |
| 10% PA 6.6 $H_2O$/Luft, 60 μm, PES | 3072 |
| Die untersuchten Proben weisen eine sehr hohe Wasserdampfdurchlässigkeit auf. | |

Die erfindungsgemäß gefundene Mikroporosität der durch einen Koagulationsprozess aus ionischen Flüssigkeiten hergestellten Polyamidbeschichtungen öffnet völlig neue Perspektiven für Beschichtungen auf Basis synthetischer Polymere. Im Bereich der Funktionsbekleidung können Hydrophil-Beschichtungen aus Polyamid viele der von gängigen Hydrophil-Beschichtungen bekannten Nachteile vermeiden und zeigen ein verbessertes Feuchtemanagement, (Wasserdampfdurchlässigkeit im Verhältnis zur Wassersäule), eine verbesserte Scheuerbeständigkeit, ein verringertes Anschmutzen durch Migration, eine verbesserte Rheologie der Beschichtungspasten und eine verbesserte Haftung.

**Beschreibung der Messmethoden:**

Wasserdampfsorption

Für die Messung wurden die Filme 1 Tag bei 20°C und 65% rel. Luftfeuchtigkeit aufbewahrt, dann gewogen, bei 105°C 2 Stunden getrocknet und die adsorbierte Wassermenge gravimetrisch bis zur Gewichtskonstanz ermittelt.

$$WDS\% = (m_{klimatisiert} - m_{trocken}) m_{trocken}$$

## Wasserdichtheit

Die Bestimmung der Wasserdichtheit erfolgt in Anlehnung an DIN 53886.

Die Apparatur wird vor Messbeginn mit dest. Wasser gefüllt und das Niveaugefäß auf die Nullmarke gesetzt. Der Wasserspiegel muss mit der Nullmarke und dem unteren Einspannflansch abschließen. Nach jeder Neufüllung ist darauf zu achten, dass sich in dem Verbindungsschlauch zwischen Wassergefäß und Einspannung keine Luftblasen befinden.

Der Film bzw. die beschichtete Textilprobe wird mit der beschichteten Seite nach unten, auf die Wasseroberfläche des Einspahnflansches gelegt und mit dem oberen Einspannflansch verschraubt. Danach wird das Niveaugefäß mit einer motorbetriebenen Seilwinde (Geschwindigkeit 20 cm/min) nach oben bewegt.

Der Skalenwert, bei dem mehrere Wassertropfen durch den Film treten, wird notiert. Die max. Höhe für die Wassersäule beträgt aus apparativen Gründen 160 cm.

## Wasserdampfdurchlässigkeit

Gravimetrisches Verfahren in Anlehnung an DIN 53122

*Vorgehensweise:* Getrocknetes Kieselgel (ca. 130g) in Becher einfüllen, Filme bzw. Probe mit Beschichtung nach außen aufspannen, Gesamtgewicht bestimmen und in vorklimatisierten Klimaschrank (38°C, 90% Luftfeuchtigkeit) stellen.

Becher werden nach 24h gewogen. Berechnet wird die Gewichtsänderung nach 24h [g/(m$^{2*}$d)]. Die Fläche beträgt 18.1 cm$^2$ (r=4.8 cm)

## Luftdurchlässigkeit

Die Luftdurchlässigkeitsprüfung erfolgt am Prüfgerät Textest FX 3300 nach DIN 53887.

Das Messgerät besteht aus einem Vakuumgebläse, das Luft durch einen Messkopf saugt. Das Prüfmuster wird auf die Messöffnung gelegt, durch Niederdrücken des Andruckarms fixiert, wobei das Vakuumgebläse automatisch eingeschaltet wird. Der Messbereich wird so gewählt, dass die Bereichsanzeige im grünen oder gelben Bereich einpendelt.

Die Messung wird durch erneutes Andrücken des Andruckarmes beendet.

Messparameter:

| | | |
|---|---|---|
| Messfläche | 20 cm$^2$ | |
| Prüfdruck | 100 Pa | |
| Maßeinheit | l/m$^2$/s | |
| Messbereich | 4-5 | Gewebe |
| | 1 | Filme, Beschichtungen |
| Prüfmuster | die einseitig beschichteten Gewebe werden mit der beschichteten Seite nach unten eingespannt | |

## Wasserrückhaltevermögen nach DIN 53814

Wasserrückhaltevermögen $W_t$ ist das Verhältnis des Gewichtes $m_w$ der vom Fasergut aufgenommenen Wassermenge zum Gewicht $m_{tr}$ des bei 105°C getrockneten Fasergutes.

$$W_t . \frac{m_w}{m_{tr}} . = \frac{m_f - m_{tr}}{m_{tr}}$$

$m_w$ = Gesicht des klimatisierten Fasergutes
$m_f$ = Gewicht des feuchten Fasergutes
$m_{tr}$ = Gewicht des getrockneten Fasergutes

Bestimmung von $W_t$

Vier Proben werden in je ein trockenes gewogenes Schleudergefäß mit Stopfen eingewogen (ca. 100 mg).

Nach dem Wägen werden die Schleudergefäße auf ein Steckbrett gestellt und durch Zulauf von unten mit dem Wasser (20 $\pm$ 2 ml) gefüllt.

Es ist darauf zu achten, dass während des Netzvorganges die ganze Probe im Wasser untergetaucht bleibt. Die Netzdauer soll 2 Stunden betragen.

Nach beendetem Netzen werden die Schleudergefäße mit dem Stopfen verschlossen und zum Abschleudern in die Haltegefäße eingesetzt. 20 min lang bei 4000 m/min zentrifugiert.

Nach dem Zentrifugieren werden die Gefäße gewogen. Bestimmung des Feuchtgewichtes $m_f$. Nach dem Wägen trocknet man, die Proben bei (105 $\pm$ 2) °C bis zur Gewichtskonstanz. Wobei die Stopfen von den Schleudergefäßen abgenommen werden. Nach dem Abkühlen im Exsikkator werden die Stopfen wieder aufgesetzt, und es wird das Gewicht $m_{tr}$ der getrockneten Probe bestimmt.

Auswertung:

$$W_t = \frac{m_f - m_{tr}}{m_{tr}} *100$$

Schäume werden typischerweise nach ihrer Zellengröße, der BET-Oberfläche und der Anzahl an Zellen in einer Volumeneinheit unterschieden. Technische Schäume weisen eine Zellengröße von 100 bis 500 $\mu$m bei einer BET-Oberfläche von 0,1 bis 1 $m^2$/g und einer Anzahl von etwa $10^5$ Stellen/$cm^3$ auf. Für vernetzte Polyolefinschäume erhält man Zellgrößen von 20 bis 100 $\mu$m, BET-Oberfläche von etwa 10 $m^2$/g bei einer Anzahl von etwa $10^6$ Zellen/$cm^3$. Mikrozellulare Schäume weisen eine Zellengröße von 1 bis 10 $\mu$m bei einer BET-Oberfläche im Bereich von 10 bis 20 $m^2$/g und einer Anzahl von $10^7$ bis $10^9 cm^3$ auf. Ultramikrozellulare Schäume weisen eine Zellgröße von etwa 0,1 $\mu$m, eine BET-Oberfläche im Bereich von 100 bis 400 $m^2$/g und eine Anzahl von etwa $10^9$ bis $10^{12}$ Zellen/$cm^3$ auf. Eine genauere Definition der unterschiedlichen Schaumtypen findet sich in J. L. Throne, Thermoplastic foams, Sharewood Publishers, Hinckley OH, 1996, Kap. 11 "Newer foaming technologies".

Herstellung von nicht erfindungsgemäßen Formkörpern

330 g Polyamid wurden in 2210 g EMIM Acetat in zwei Ansätzen bei einer Temperatur von 130 °C unter Rühren gelöst. Es ergab sich eine 13 gew.%ige Polymerlösung.

Etwa 2400 g der bei 130 °C gelösten PA/EMIM-Lösung wurden in drei Aluminiumbleche gegossen und über Nacht in verschlossenen PE-Beuteln abgekühlt. Nach dem Abkühlen war die Masse homogen wachsartig. Die Masse wurde zerschnitten zu Würfeln der Dimension von etwa 1 x 1 x 1 cm. Die Würfel wurden in ein Netzgefäß eingefüllt, das in ein drei Liter fassendes Extraktionsgefäß eingesetzt wurde. Beim Extraktionsgefäß handelte es sich um ein drei Liter fassendes HWS-Gefäß mit Mantelheizung und Bodenablauf und aufsteigendem Intensiv-RF-Kühler. Ein ölbeheizter Thermostat wurde zur Temperaturführung eingesetzt.

Das Extraktionsgefäß war mit einem Verdampfer verbunden. Der Verdampfer bestand aus einem sechs Liter fassenden Rundkolben, der mit Rührmotor, Glasrührer, Heizpilzen mit Regler, einem aufsteigenden Glasrohr als Verbindung zum Extraktionskolben und einem Rücklauf vom Extraktionskolben zum Verdampfer über ein 10 mm Syphon-Glasrohr versehen war.

Das Extraktionsgefäß wurde mit 1,5 l destilliertem Wasser gefüllt, weitere 2,5 l destilliertes Wasser wurden in den Verdampferkolben gefüllt. Die Heizung des Verdampfers wurde auf 105 °C Soll-Temperatur eingestellt.

Nach zwei Stunden kontinuierlicher Extraktion wurden 4 l der Extraktlösung durch Frischwasser ersetzt. Die ausgetauschte Extraktlösung enthielt 1,34 kg MIM Acetat. Nach 7 Stunden Extrahieren wurden wiederum 4 l der Extraktlösung durch Frischwasser ersetzt, und nach 22 Stunden wurde die Extraktion abgeschlossen.

Die aus dem Netzgefäß entnommenen Stücke wiesen eine leicht gelbliche Farbe auf (entsprechend der Eigenfarbe des Polyamids). Sie wurden in Aceton eingebracht und mit dem Ultraturrax aufgeschlämmt, über einen Rundfilter abfiltriert, mechanisch zerkleinert und bei Raumtemperatur über Nacht trocknen gelassen. Sodann wurde für 6 Stunden bei 105 °C unter vermindertem Druck getrocknet. Die Ausbeute betrug nach 6 Stunden 316,2 g.

**Patentansprüche**

1. Verfahren zur Herstellung poröser Strukturen, ausgewählt aus porösen Fasern, Folien, Filmen, Beschichtungen aus Polyamid durch Lösen des Polyamids in einer ionischen Flüssigkeit und Fällen oder Koagulieren des gelösten Polyamids durch Kontaktieren der Lösung mit einem flüssigen Fällmedium, wobei Fasern im Nassspinnverfahren aus dem gelösten Polyamid durch Fällung in protischen Lösungsmitteln, insbesondere Wasser, einem $C_{1-4}$-Alkanol oder Gemischen davon und nachfolgendes Gefriertrocknen hergestellt werden, Folien, Filme oder Beschichtungen durch Aufrakeln des gelösten Polyamids auf eine Substratfläche, gegebenenfalls Besprühen mit protischem Lösungsmittel, insbesondere Wasser, einem $C_{1-4}$-Alkohol oder Gemischen davon, Eintauchen in ein Fällungs- oder Koagulationsbad, nachfolgendes Gefriertrocknen der erhaltenen Folie, des Films oder des beschichteten Substrats hergestellt werden.

2. Verfahren nach Anspruch 1, **dadurch gekennzeichnet, dass** in der ionischen Flüssigkeit das Kation ausgewählt ist aus gegebenenfalls substituierten Imidazoliumkationen, gegebenenfalls substituierten 1,8-Diazabicyclo[5.4.0]undec-7-eniumkationen oder Gemischen davon.

3. Verfahren nach Anspruch 2, **dadurch gekennzeichnet, dass** in der ionischen Flüssigkeit das Kation ausgewählt ist aus Ethylmethylimidazolium(EMIM)kationen, Butylmethylimidazolium(BMIM)kationen, 1,8-Diazabicyclo-[5.4.0]undec-7-enium(DBU)kationen, 8-Butyl-DBU-Kationen, 8-Octyl-DBU-Kationen oder Gemischen davon.

4. Verfahren nach Anspruch 2 oder 3, **dadurch gekennzeichnet, dass** in der ionischen Flüssigkeit das Anion ausgewählt ist aus Halogenid, gegebenenfalls substituiertem $C_{1-4}$-Carboxylat, Phosphat, $C_{1-4}$-Alkylphosphat, Di-$C_{1-4}$-alkylphosphat, $C_{1-4}$-Alkylsulfonat, Hydrogensulfat oder Gemischen davon.

5. Verfahren nach einem der Ansprüche 1 bis 4, **dadurch gekennzeichnet, dass** die ionische Flüssigkeit Ethylmethylimidazoliumdiethylphosphat (EMIM DEP), Methylmethylimidazoliumdimethylphosphat (MMIM DMP) oder ein Gemisch davon oder Ethylmethylimidazoliumacetat (EMIM Acetat) ist.

6. Verfahren nach Anspruch 1, **dadurch gekennzeichnet, dass** bei der Herstellung der Formkörper die Extraktion bei einer Temperatur, die dem Siedepunkt des protischen Lösungsmittels $\pm$ 10 °C entspricht, und vorzugsweise mit Dampf des Extraktionsmittels erfolgt.

7. Poröse Struktur, ausgewählt aus Fasern, Folien, Filmen, Beschichtungen, aus Polymeren, erhältlich nach einem Verfahren gemäß einem der Ansprüche 1 bis 6, wobei Polyamid-6 oder Polyamid-66 eingesetzt werden.

8. Poröse Struktur nach Anspruch 7, **dadurch gekennzeichnet, dass** sie eine offenzellige Porenstruktur aufweist, wobei die äußere Oberfläche (Umhüllung) der Struktur offenzellig oder teilweise oder ganz geschlossen sein kann.

9. Verwendung poröser Strukturen nach einem der Ansprüche 7 oder 8 zur Herstellung von Membranen, Filtern, Schlichten, Haftgrundierungen, Trägermaterialien, Hygieneartikeln, Isoliermaterialien und zur Ausrüstung von Textilien.

**Claims**

1. A process for producing porous structures selected from porous fibers, foils, films, coatings from polyamide by dissolving the polyamide in an ionic liquid and precipitating or coagulating the dissolved polyamide by contacting the solution with a liquid precipitant medium, wherein fibers are produced from the dissolved polyamide in a wet-spinning process by precipitation in protic solvents, in particular water, a C1-4-alkanol or mixtures thereof, and subsequent freeze drying, wherein foils, films or coatings are produced by blade coating the dissolved polyamide onto a substrate surface, optionally spraying with protic solvent, in particular water, a C1-4-alcohol or mixtures thereof, dipping into a precipitation or coagulation bath, subsequent freeze drying of the resulting foil, of the film or of the coated substrate.

2. The process according to claim 1 wherein the cation in the ionic liquid is selected from substituted or unsubstituted imidazolium cations, substituted or unsubstituted 1,8-diazabicyclo[5.4.0]undec-7-enium cations or mixtures thereof.

3. The process according to claim 2 wherein the cation in the ionic liquid is selected from ethylmethylimidazolium (EMIM) cations, butylmethylimidazolium (BMIM) cations, 1,8-diazabicyclo[5.4.0]undec-7-enium (DBU) cations, 8-butyl-DBU cations, 8-octyl-DBU cations or mixtures thereof.

4. The process according to claim 2 or 3 wherein the anion in the ionic liquid is selected from halide, substituted or unsubstituted C1-4-carboxylate, phosphate, C1-4-alkyl phosphate, di-C1-4-alkyl phosphate, C1-4-alkyl sulfonate, hydrogensulfate or mixtures thereof.

5. The process according to any one of claims 1 to 4 wherein the ionic liquid is ethylmethylimidazolium diethylphosphate (EMIM DEP), methylmethylimidazolium dimethylphosphate (MMIM DMP) or a mixture thereof or ethylmethylimidazolium acetate (EMIM acetate).

6. The process according to claim 1 wherein, in the production of moldings, the extraction is carried out at a temperature which corresponds to the boiling point of the protic solvent $\pm$ 10°C, and preferably with vapor of the extractant.

7. A porous structure selected from fibers, foils, films, coatings, from polymers, obtainable by a process according to any one of claims 1 to 6, wherein nylon-6 or nylon-66 are used.

8. The porous structure according to claim 7 having an open-cell pore structure in which the outer surface (envelope) of the structure may be open-cell or partly or wholly closed.

9. The use of porous structures according to either of claims 7 and 8 for producing membranes, filters, sizes, bonding primers, support materials, hygiene articles, insulating materials or for finishing textiles.

**Revendications**

1. Procédé de fabrication de structures poreuses, choisies parmi des fibres, des feuilles, des films, des revêtements poreux en polyamide, par dissolution du polyamide dans un liquide ionique et précipitation ou coagulation du polyamide dissous par mise en contact de la solution avec un milieu de précipitation liquide, des fibres étant fabriquées par le procédé de filage en milieu humide à partir du polyamide dissous par précipitation dans des solvants protiques, notamment de l'eau, un alcanol en $C_{1-4}$ ou leurs mélanges, puis lyophilisation, des feuilles, des films ou des revêtements étant fabriqués par enduction du polyamide dissous sur une surface substrat, éventuellement pulvérisation avec un solvant protique, notamment de l'eau, un alcool en $C_{1-4}$ ou leurs mélanges, immersion dans un bain de précipitation ou de coagulation, puis lyophilisation de la feuille, du film ou du substrat revêtu obtenu.

2. Procédé selon la revendication 1, **caractérisé en ce que**, dans le liquide ionique, le cation est choisi parmi les cations imidazolium éventuellement substitués, les cations 1,8-diazabicyclo[5.4.0]undéc-7-énium éventuellement substitués ou leurs mélanges.

3. Procédé selon la revendication 2, **caractérisé en ce que**, dans le liquide ionique, le cation est choisi parmi les cations éthylméthylimidazolium (EMIM), les cations butylméthylimidazolium (BMIM), les cations 1,8-diazabicyclo[5.4.0]undéc-7-énium (DBU), les cations 8-butyl-DBU, les cations 8-octyl-DBU ou leurs mélanges.

4. Procédé selon la revendication 2 ou 3, **caractérisé en ce que**, dans le liquide ionique, l'anion est choisi parmi un halogénure, un carboxylate en $C_{1-4}$ éventuellement substitué, un phosphate, un alkylphosphate en $C_{1-4}$, un dialkylphosphate en $C_{1-4}$, un alkylsulfonate en $C_{1-4}$, un hydrogénosulfate ou leurs mélanges.

5. Procédé selon l'une quelconque des revendications 1 à 4, **caractérisé en ce que** le liquide ionique est le diéthylphosphate d'éthylméthylimidazolium (EMIM DEP), le diméthylphosphate de méthylméthylimidazolium (MMIM DMP) ou un de leurs mélanges ou l'acétate d'éthylméthylimidazolium (acétate d'EMIM).

6. Procédé selon la revendication 1, **caractérisé en ce que**, lors de la fabrication des corps moulés, l'extraction a lieu à une température qui correspond au point d'ébullition du solvant protique $\pm$ 10 °C et de préférence avec la vapeur de l'agent d'extraction.

**7.** Structure poreuse, choisie parmi les fibres, les feuilles, les films, les revêtements, en polymères, pouvant être obtenue par un procédé selon l'une quelconque des revendications 1 à 6, du polyamide 6 ou du polyamide 66 étant utilisé.

**8.** Structure poreuse selon la revendication 7, **caractérisée en ce qu'**elle présente une structure de pores à cellules ouvertes, la surface extérieure (enveloppe) de la structure pouvant être à cellules ouvertes ou partiellement ou totalement fermées.

**9.** Utilisation de structures poreuses selon l'une quelconque des revendications 7 ou 8 pour la fabrication de membranes, de filtres, d'encollages, de couches primaires adhésives, de matériaux supports, d'articles d'hygiène, de matériaux isolants et pour le traitement de textiles.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10233703 A
- US 5300272 A
- US 4118 A
- US 449 A
- JP 2003034733 A
- DE 4009865 A
- US 20050288484 A
- US 120050288484 A
- US 2071250 A
- US 2071251 A
- US 2130523 A
- US 2130948 A
- US 2241322 A
- US 2312966 A
- US 2512606 A
- US 3393210 A
- EP 38094 A
- EP 38582 A
- EP 39524 A
- EP 129195 A
- EP 129196 A
- WO 02079269 A
- EP 2007060881 W
- DE 10202838 A
- WO 2005019137 A
- WO 2005007657 A
- WO 03029329 A
- WO 2004084627 A
- WO 2005017001 A
- WO 2005017252 A

**In der Beschreibung aufgeführte Nicht-Patentliteratur**

- **J. H. AUBERT ; R. L. CLOUGH.** *Polymer,* 1985, vol. 26, 2047-2054
- **FACHMANN.** Ullmanns Encyklopädie der Technischen Chemie. Verlag Chemie, 1980, vol. 19, 39-54
- Ullmanns Encyclopedia of Industrial Chemistry. VCH Verlag, 1992, vol. A21, 179-206
- Polyamide. **STOECKHERT.** Kunststofflexikon. Hanser Verlag, 1992, 425-428
- *Angew. Chem.,* 2000, vol. 112, 3926-3945
- **K. N. MARSH et al.** *Fluid Phase Equilibria,* 2004, vol. 219, 93-98
- **J. G. HUDDLESTON et al.** *Green Chemistry,* 2001, 156-164